# EUROPÄISCHE PATENTSCHRIFT

(11) **EP 2 446 227 B1**
(45) Veröffentlichungstag und Bekanntmachung des Hinweises auf die Patenterteilung: **06.05.2015**
(21) Anmeldenummer: 10720132.9
(22) Anmeldetag: 08.05.2010
(51) Int. Cl.: G01C 21/36, G06F 3/048, G06F 3/0488

(54) **NAVIGATIONSSYSTEM, INSBESONDERE FÜR EIN KRAFTFAHRZEUG**
NAVIGATION SYSTEM, IN PARTICULAR FOR A MOTOR VEHICLE
SYSTÈME DE NAVIGATION DESTINÉ EN PARTICULIER À UN VÉHICULE AUTOMOBILE

(30) Priorität: 27.06.2009 DE 102009030791
(43) Veröffentlichungstag der Anmeldung: 02.05.2012
(73) Patentinhaber: Audi AG, 85045 Ingolstadt (DE); Volkswagen Aktiengesellschaft, 38440 Wolfsburg (DE)
(72) Erfinder: WÄLLER, Christoph, 38106 Braunschweig (DE)
(74) Vertreter: Brandt, Kai
(86) Internationale Anmeldenummer: PCT/EP2010/002818
(87) Internationale Veröffentlichungsnummer: WO 2010/149247

(56) Entgegenhaltungen:
- EP-A2- 2 063 226
- JP-A- 2000 163 031
- US-A1- 2009 005 981

## Beschreibung

Die Erfindung betrifft ein Navigationssystem, insbesondere für ein Kraftfahrzeug, zur Bestimmung der Position des Navigationssystems oder des Kraftfahrzeuges und zur Bestimmung einer Route zu einem Zielpunkt, wobei das Navigationssystem ein Display zur Darstellung veränderlicher Informationen und einen über dem Display angeordneten transparenten Touchscreen oder ein unabhängig vom Display angeordnetes Touchpad zum Erkennen der Position einer Berührung des Touchscreens oder des Touchpads umfasst.

Die DE 41 21 180 A1 offenbart ein Verfahren zur manuellen Steuerung einer elektronischen Anzeigevorrichtung, die einen Bildschirm und Bedienelemente sowie eine Auswerteschaltung umfasst, wobei mittels der Auswerteschaltung zwei Abstandszonen überbracht und bei der Annäherung einer Hand eines Benutzers zur Auslösung von Bedienungsfunktionen verwendet werden.

Die US-2007/0109323 A1 offenbart ein Kärtenanzeigesystem mit einem Touchpanel und einem Display, wobei ein Fensterrahmen einer Kartenanzeige sowie ein Modul zur Erkennung eines Kontaktes eines Indikationselementes des Fensterrahmens vorgesehen sind. Dabei wird das Fenster in seiner Größe in Übereinstimmung mit einer Bewegung des Indikationselementes in seiner Größe verändert.

Die WO 2008/015504 A2 offenbart ein Display und eine Anzeigesteuerung zur Darstellung eines Fensters und eines Bildes in dem Fenster, wobei das Fenster einen Scrollbalken zur Veränderung der horizontalen oder der vertikalen Position des Fensters in Bezug auf das Bild im Fenster umfasst.

Die DE 602 20 933 T2 offenbart ein Verfahren zum Unterscheiden zwischen zwei oder mehr zeitlich überlappten Berührungsangaben in ein Berührungsbildschirmsystem.

Die US 2006/0161871 A1 offenbart eine Ein-/Ausgabeplattform, die eine Ein-/Ausgabeoberfläche mit einem oder mehreren Ein-/Ausgabegeräten aufweist. Darüber hinaus ist ein Annäherungssystem zur Erkennung, ob sich ein Finger in der nahen Umgebung der Ein-/Ausgabeoberfläche befindet, ohne diese zu berühren, vorgesehen.

Die EP2063226 offenbart ein Navigationssystem mit einem Display und einem über dem Display angeordneten transparenten Touchscreen. Bei Verwenden des Touchscreens als kombinierte Eingabe-/Ausgabeeinheit kann in einem Auswahlmodus ein Kartenausschnitt durch Ziehen eines Fingers entlang der Bildschirmoberfläche verschoben und durch Ziehen des Fingers entlang einer Zoom-Leiste, die in einem bestimmten Abschnitt des Bildschirms dargestellt wird, vergrößert bzw. verkleinert werden.

Die EP 1 517 228 A2 offenbart ein Verfahren zur Gestenerkennung, wobei ein Bild auf einer-Berührungsoberfläche dargestellt wird, wobei eine Berührung dieser Berührfläche detektiert-wird und ermittelt wird, ob Mehrfachberührungen einer Geste entsprechen, wobei das dargestellte Bild verändert wird, wenn eine bestimmte Geste erkannt wird.

Es ist Aufgabe der Erfindung, ein verbessertes Navigationssystem, insbesondere ein verbessertes Navigationssystem für ein Kraftfahrzeug anzugeben. Es ist insbesondere wünschenswert, die Bedienung eines Navigationssystems für ein Kraftfahrzeug zu beschleunigen, damit der notwendige Blickkontakt auf eine Anzeige des Navigationssystems möglichst gering ist.

Vorgenannte Aufgabe wird durch ein Navigationssystem, insbesondere für ein Kraftfahrzeug, zur Bestimmung der Position des Navigationssystems oder des Kraftfahrzeuges und zur Bestimmung einer Route zu einem Zielpunkt gelöst, wobei das Navigationssystem ein Display bzw. eine Anzeigeeinrichtung zur Darstellung veränderlicher Informationen und einen über dem Display angeordneten transparenten Touchscreen oder ein unabhängig vom Display bzw. der Anzeigeeinrichtung angeordnetes Touchpad zum Erkennen der Position einer Berührung des Touchscreens umfasst, wobei das Navigationssystem eine Steuerung zur Anzeige einer Kartendarstellung auf dem Display als ein erster Bedienbereich und zur Anzeige zumindest eines zweiten Bedienbereichs auf dem Display umfasst, wobei bei einer berührenden Ziehbewegung über den Touchscreen über dem ersten Bedienbereich eine Funktion aus der Gruppe
- Verschieben der Kartendarstellung,
- Drehen der Kartendarstellung und
- Neigen der Kartendarstellung
ausführbar ist, und wobei bei einer berührenden Ziehbewegung über den Touchscreen oder das Touchpad über dem zweiten Bedienbereich eine andere Funktion aus der Gruppe
- Verschieben der Kartendarstellung,
- Drehen der Kartendarstellung und
- Neigen der Kartendarstellung
ausführbar ist.

Eine Kartendarstellung im Sinne der Erfindung kann eine Karte, ein Satellitenbild oder eine 3D-Grafik sein. Die Karte, das Satellitenbild bzw. die 3D-Grafik kann dabei z. B. in Draufsicht, in Vogelperspektive oder in first-person-view dargestellt werden.

Ein Display bzw. eine Anzeigeeinrichtung im Sinne der Erfindung ist insbesondere ein Display mit unabhängig voneinander ansteuerbaren Pixeln. Ein Display im Sinne der Erfindung ist insbesondere ein Matrixdisplay. Ein Display im Sinne der Erfindung ist insbesondere ein TFT.

Gemäß der Erfindung ist das unabhängig vom Display angeordnete Touchpad derart ausgebildet; dass die Koordinaten des Touchpad mit den Koordinaten des Displays bzw. der Anzeigeeinrichtung koordinieren, das heißt eine Berührung des Touchpads oder eine Bediengeste ist definierten Koordinaten auf dem Display zuordbar.

In vorteilhafter Ausgestaltung der Erfindung ist mittels der Steuerung ein dritter Bedienbereich auf dem Display darstellbar, wobei bei einer berührenden Ziehbewegung über den Touchscreen oder das Touchpad über dem dritten Bedienbereich die verbleibende Funktion aus der Gruppe
- Verschieben der Kartendarstellung,
- Drehen der Kartendarstellung und
- Neigen der Kartendarstellung
ausführbar ist. In weiterhin vorteilhafter Ausgestaltung der Erfindung bilden der zweite Bedienbereich und der dritte Bedienbereich einen den ersten Bedienbereich umgebenden Rahmen. In weiterhin vorteilhafter Ausgestaltung der Erfindung ist der zweite Bedienbereich dem unteren Teil des Rahmens und/oder dem oberen Teil des Rahmens zugeordnet. In weiterhin vorteilhafter Ausgestaltung der Erfindung ist der dritte Bedienbereich dem linken Teil des Rahmens und/oder dem rechten Teil des Rahmens zugeordnet.

In weiterhin vorteilhafter Ausgestaltung der Erfindung ist der zweite Bedienbereich waagerecht orientiert. In weiterhin vorteilhafter Ausgestaltung der Erfindung ist der dritte Bedienbereich senkrecht orientiert.

In weiterhin vorteilhafter Ausgestaltung der Erfindung ist die Kartendarstellung bei einer berührenden Ziehbewegung über den Touchscreen oder das Touchpad über dem ersten Bedienbereich verschiebbar. In weiterhin vorteilhafter Ausgestaltung der Erfindung ist die Kartendarstellung bei einer berührenden Ziehbewegung über den Touchscreen oder das Touchpad über dem zweiten Bedienbereich drehbar. In weiterhin vorteilhafter Ausgestaltung der Erfindung ist die Kartendarstellung bei einer berührenden Ziehbewegung über den Touchscreen oder das Touchpad über dem dritten Bedienbereich heigbar.

In weiterhin vorteilhafter Ausgestaltung der Erfindung ist der Touchscreen als Multitouchscreen bzw. das Touchpad als Multitouchpad ausgestaltet, wobei bei einer berührenden Stauch- oder Spreizbewegung über den Multitouchscreen oder das Multitouchpad über dem ersten Bedienbereich eine Funktion aus der Gruppe
- Verkleinern oder Vergrößern der Kartendarstellung und
- Neigen der Kartendarstellung
ausführbar ist, und wobei bei einer berührenden Stauch- oder Spreizbewegung über den Multitouchscreen über dem zweiten Bedienbereich und/oder über dem dritten Bedienbereich die andere Funktion aus der Gruppe
- Verkleinern oder Vergrößern der Kartendarstellung und
- Neigen der Kartendarstellung
ausführbar ist.

Ein Multitouchscreen oder ein Multitouchpad im Sinne der Erfindung ist insbesondere ein Touchscreen bzw. ein Touchpad, mittels dessen zumindest zwei gleichzeitig erfolgende Berührungen des Touchscreens bzw. des Touchpads voneinander unterschieden werden können, wobei die Position der ersten Berührung und die Position der zumindest zweiten Berührung unabhängig voneinander bestimmt werden können.

Ein Multitouchscreen oder ein Multitouchpad im Sinne der Erfindung umfasst insbesondere berührungs- oder drucksensitive Bereiche, die pixel- oder rasterförmig angeordnet sind.

Eine Stauchbewegung im Sinne der Erfindung ist insbesondere eine aufeinander zu bewegende Bewegung zweier Berührpositionen. Eine Spreizbewegung im Sinne der Erfindung ist insbesondere ein Auseinanderbewegen zweier Berührpositionen. Eine Stauchbewegung im Sinne der Erfindung kann zum Beispiel durch das aufeinander zu Bewegen zweier Fingerspitzen erzielt werden, die den Multitouchscreen bzw. das Multitouchpad berühren. Eine Spreizbewegung im Sinne der Erfindung kann insbesondere durch zwei Fingerspitzen, die den Multitouchscreen bzw. das Multitouchpad berühren, erreicht werden, wenn diese sich voneinander weg bewegen.

Vorgenannte Aufgabe wird - insbesondere in Verbindung mit vorgenannten Merkmalenzudem durch ein Navigationssystem, insbesondere für ein Kraftfahrzeug, zur Bestimmung der Position des Navigationssystems oder des Kraftfahrzeuges und zur Bestimmung einer Route zu einem Zielpunkt gelöst, wobei das Navigationssystem ein Display zur Darstellung veränderlicher Informationen und einen über dem Display angeordneten transparenten Multitouchscreen zum Erkennen der Positionen von zumindest zwei gleichzeitig erfolgenden Berührungen des Multitouchscreens umfasst, wobei das Navigationssystem eine Steuerung zur Anzeige einer Kartendarstellung auf dem Display als ein erster Bedienbereich und zur Anzeige zumindest eines zweiten Bedienbereichs auf dem Display umfasst, wobei bei einer berührenden Stauch- oder Spreizbewegung über den Multitouchscreen bzw. das Multitouchpad über dem ersten Bedienbereich eine Funktion aus der Gruppe
- Verkleinern oder Vergrößern der Kartendarstellung und
- Neigen der Kartendarstellung
ausführbar ist, und wobei bei einer berührenden Stauch- oder Spreizbewegung über den Multitouchscreen über dem zweiten Bedienbereich die andere Funktion aus der Gruppe
- Verkleinern oder Vergrößern der Kartendarstellung und
- Neigen der Kartendarstellung
ausführbar ist.

Vorgenannte Aufgabe wird - insbesondere in Verbindung mit vorgenannten Merkmalenzudem durch ein Verfahren zum Betrieb eines Navigationssystems zur Bestimmung der Position des Navigationssystems oder des Kraftfahrzeuges und zur Bestimmung einer Route zu einem Zielpunkt gelöst, wobei das Navigationssystem ein Display zur Darstellung veränderlicher Informationen und einen über dem Display angeordneten transparenten Touchscreen oder ein unabhängig vom Display angeordnetes Touchpad zum Erkennen der Position einer Berührung des Touchscreens bzw. des Touchpads oder einen über dem Display angeordneten transparenten Multitouchscreen oder ein unabhängig vom Display angeordnetes Multitouchpad zum Erkennen der Positionen von zumindest zwei gleichzeitig erfolgenden Berührungen des Multitouchscreens bzw. des Multitouchpads umfasst, wobei auf dem Display eine Kartendarstellung als ein erster Bedienbereich sowie ein zweiter Bedienbereich dargestellt werden, wobei bei einer berührenden Ziehbewegung über den Touchscreen oder den Multitouchscreen bzw. das Touchpad oder das Multitouchpad über dem ersten Bedienbereich eine Funktion aus der Gruppe
- Verschieben der Kartendarstellung,
- Drehen der Kartendarstellung und
- Neigen der Kartendarstellung
ausgeführt wird, und wobei bei einer berührenden Ziehbewegung über den Touchscreen oder den Muttitouchscreen bzw. das Touchpad oder das Multitouchpad über dem zweiten Bedienbereich eine andere Funktion aus der Gruppe
- Verschieben der Kartendarstellung,
- Drehen der Kartendarstellung und
- Neigen der Kartendarstellung
ausgeführt wird.

In vorteilhafter Ausgestaltung der Erfindung wird auf dem Display ein dritter Bedienbereich dargestellt, wobei bei einer berührenden Ziehbewegung über den Touchscreen oder den Multitouchscreen bzw. das Touchpad oder das Multitouchpad über dem dritten Bedienbereich die verbleibende Funktion aus der Gruppe
- Verschieben der Kartendarstellung,
- Drehen der Kartendarstellung und
- Neigen der Kartendarstellung
ausgeführt wird.

In weiterhin vorteilhafter Ausgestaltung der Erfindung ist der Touchscreen als Multitouchscreen bzw. das Touchpad als Multitouchpad ausgestaltet, wobei bei einer berührenden Stauch- oder Spreizbewegung über den Multitouchscreen bzw. das Multitouchpad über dem ersten Bedienbereich eine Funktion aus der Gruppe
- Verkleinern oder Vergrößern der Kartendarstellung und
- Neigen der Kartendarstellung
ausgeführt wird, und wobei bei einer berührenden Stauch- oder Spreizbewegung über den Multitouchscreen bzw. das Multitouchpad über dem zweiten Bedienbereich und/oder über dem dritten Bedienbereich die andere Funktion aus der Gruppe
- Verkleinern oder Vergrößern der Kartendarstellung und
- Neigen der Kartendarstellung
ausgeführt wird.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: ein Ausführungsbeispiel einer ausschnittsweisen Innenansicht eines Kraftfahrzeuges,
- Fig. 2: eine Prinzipdarstellung des Kraftfahrzeuges gemäß Fig. 1,
- Fig. 3: ein Ausführungsbeispiel einer Bedienvorrichtung,
- Fig. 4: eine mittels der Bedienvorrichtung gemäß Fig. 3 dargestellte Kartendarstellung,
- Fig. 5: die Kartendarstellung gemäß Fig. 4 in Verbindung mit einem einen Bedienbereich umfassenden Rahmen und
- Fig. 6: berührende Bewegungen zur Bedienung der Bedienvorrichtung gemäß Fig. 3.

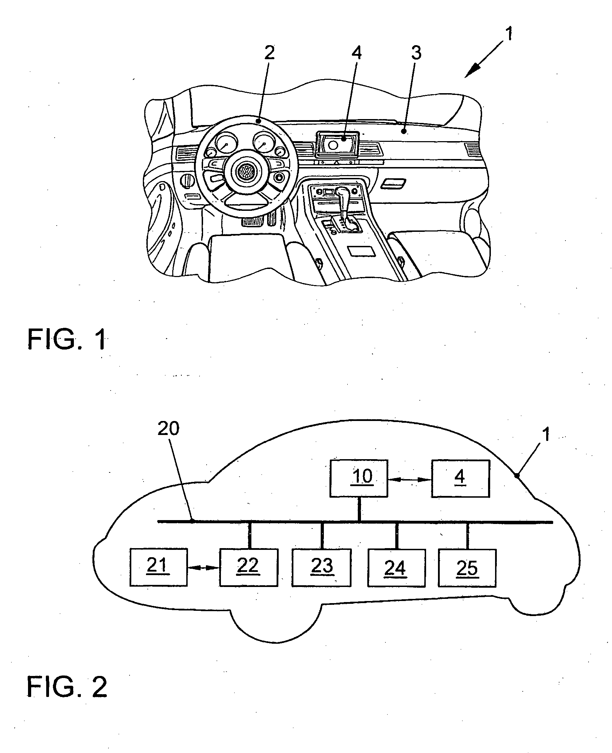

Fig. 1 zeigt ein Ausführungsbeispiel einer ausschnittsweisen Innenansicht eines Kraftfahrzeuges 1, das in Fig. 2 in einer Prinzipdarstellung dargestellt ist. Dabei umfasst das Kraftfahrzeug 1 eine neben dem Lenkrad 2 am Armaturenbrett 3 angeordnete Bedienvorrichtung 4. Mittels der Bedienvorrichtung 4 sind ein Navigationskernel 23 sowie zum Beispiel eine Klimaautomatik 24, ein Infotainmentsystem 25 und - über eine Mobiltelefon-Schnittstelle 22 - ein Mobiltelefon 21 bedienbar. Dazu ist die Bedienvorrichtung 4 mit einem Anzeigesteuergerät 10 gekoppelt, das über ein Bussystem mit der Telefonschnittstelle 22, mit dem Navigationskernel 23, mit der Klimaautomatik 24 und mit dem Infotainmentsystem 25 verbunden ist. Der Navigationskernel 23, das Anzeigesteuergerät 10 und die Bedienvorrichtung 4 bilden dabei ein Ausführungsbeispiel für ein Navigationssystem im Sinne der Ansprüche.

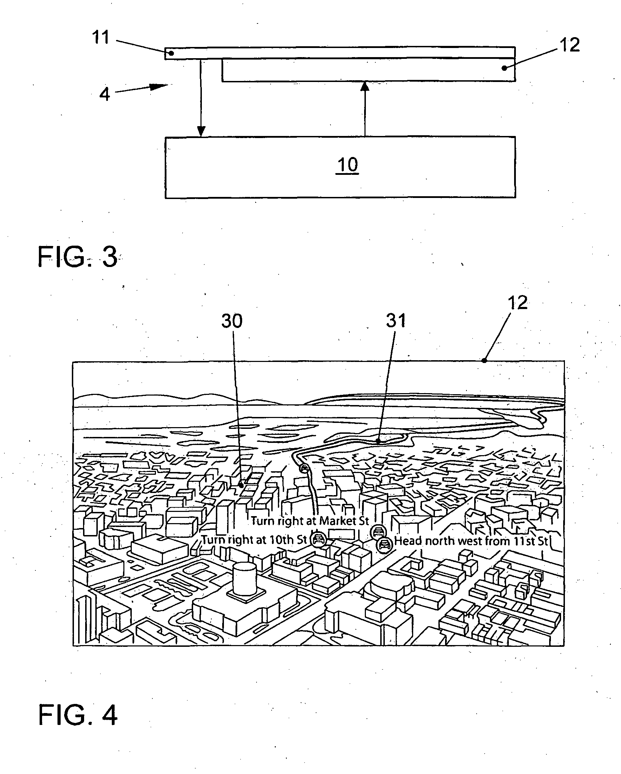

Die Bedienvorrichtung 4 umfasst - wie in Fig. 3 dargestellt - ein Display 12 zur Darstellung veränderlicher Informationen und einen über dem Display 12 angeordneten transparenten Multitouchscreen 11 zum Erkennen der Position von zumindest zwei gleichzeitig erfolgenden Berührungen des Multitouchscreens 11. Der Multitouchscreen 11 umfasst eine matrixförmige Struktur leitfähiger Leitungen/Flächen mit Spalten und Zeilen. Diese Struktur kann beispielsweise aus ITO-Flächen oder Feindrähten bestehen bzw. solche umfassen.

Mittels des Displays 12 der Bedienvorrichtung 4 ist - wie in Fig. 4 dargestellt - eine Kartendarstellung 30 für den Navigationskernel 23 bzw. des Navigationskernels 23, insbesondere in Verbindung mit einer Route 31 von einem Ort des Kraftfahrzeuges 1 zu einem Zielort darstellbar. In dem Ausführungsbeispiel gemäß Fig. 4 ist die Kartendarstellung 30 ein dreidimensionales Abbild einer Landschaft in einer Vogelperspektivdarstellung.

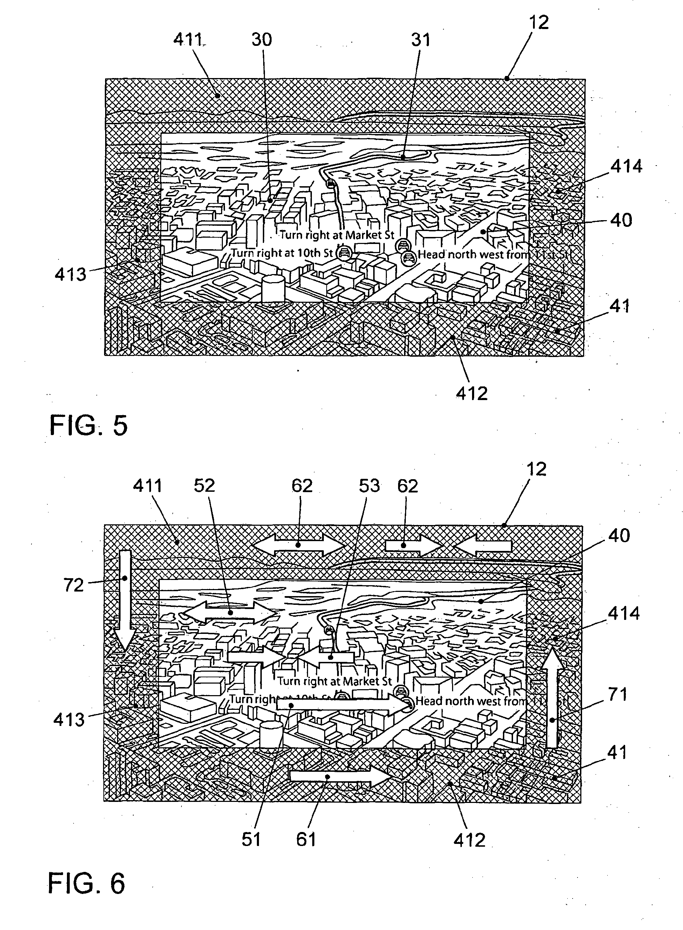

Bei Berühren des Multitouchscreens 11 wechselt die Darstellung gemäß Fig. 4 in eine Darstellung gemäß Fig. 5, bei der ein Rahmen 41 einen inneren Bereich 40 umschließt. Der innere Bereich 40 ist ein Ausführungsbeispiel für einen ersten Bedienbereich im Sinne der Ansprüche. Im inneren Bereich 40 bleibt die Kartendarstellung erhalten. Es kann vorgesehen sein, dass die Kartendarstellung auch im Rahmen 41 erhalten bleibt. Dabei ist jedoch vorteilhafterweise vorgesehen, dass die Kartendarstellung abgesetzt, zum Beispiel gedimmt, dargestellt wird. Der Rahmen 41 umfasst einen oberen Teil 411, einen unteren Teil 412, einen linken Teil 413 und einen rechten Teil 414. Der obere Teil 411 und der untere Teil 412 des Rahmens 41 bilden ein Ausführungsbeispiel für einen zweiten Bedienbereich im Sinne der Ansprüche. Der linke Teil 413 und der rechte Teil 414 des Rahmens 41 bilden ein Ausführungsbeispiel für einen dritten Bedienbereich im Sinne der Ansprüche.

Erfolgt im inneren Bereich 40 eine berührende Ziehbewegung über den Multitouchscreen 11, wie dies in Fig. 6 durch den mit Bezugszeichen 51 bezeichneten Pfeil symbolisiert ist, so wird die Kartendarstellung 30 entsprechend dieser Bewegung verschoben.

Erfolgt im inneren Bereich 40 eine berührende Spreizbewegung über den Multitouchscreen 11, wie dies in Fig. 6 durch den mit Bezugszeichen 52 bezeichneten Doppelpfeil symbolisiert ist, so wird die Kartendarstellung 30 entsprechend dieser Spreizbewegung vergrößert dargestellt (Verkleinerung der Maßstabes).

Erfolgt im inneren Bereich 40 eine berührende Stauchbewegung über den Multitouchscreen 11, wie dies in Fig. 6 durch das mit Bezugszeichen 53 bezeichnete Pfeilpaar symbolisiert ist, so wird die Kartendarstellung 30 entsprechend dieser Bewegung verkleinert dargestellt (Vergrößerung der Maßstabes).

Erfolgt im oberen Teil 411 oder unteren Teil 412 des Rahmens 41 eine berührende Ziehbewegung über den Multitouchscreen 11, wie dies in Fig. 6 durch den mit Bezugszeichen 61 bezeichneten Pfeil symbolisiert ist, so wird die Kartendarstellung 30 analog zu dieser Beweggung gedreht.

Erfolgt im oberen Teil 411 oder unteren Teil 412 des Rahmens 41 eine berührende Spreizbewegung:über den Multitouchscreen 11, wie dies in Fig. 6 durch den mit Bezugszeichen 62 bezeichneten Doppelpfeil symbolisiert ist, so wird die Kartendarstellung 30 entsprechend dieser Bewegung in Richtung eines größeren Neigungswinkels geneigt.

Erfolgt im oberen Teil 411 oder unteren Teil 412 des Rahmens 41 eine berührende Stauchbewegung über den Multitouchscreen 11, wie dies in Fig. 6 durch den mit Bezugszeichen 63 bezeichnete Pfeilpaar symbolisiert ist, so wird die Kartendarstellung 30 entsprechend dieser Bewegung in Richtung eines kleineren Neigungswinkels geneigt.

Erfolgt im linken Teil 413 oder rechten Teil 414 des Rahmens 41 eine berührende Ziehbewegung über den Multitouchscreen 11 nach oben, wie dies in Fig. 6 durch den mit Bezugszeichen 71 bezeichneten Pfeil symbolisiert ist, so wird die Kartendarstellung 30 entsprechend dieser Bewegung in Richtung eines größeren Neigungswinkels geneigt.

Erfolgt im linken Teil 413 oder rechten Teil 414 des Rahmens 41 eine berührende Ziehbewegung über den Multitouchscreen 11 nach unten, wie dies in Fig. 6 durch den mit Bezugszeichen 72 bezeichneten Pfeil symbolisiert ist, so wird die Kartendarstellung 30 entsprechend dieser Bewegung in Richtung eines kleineren Neigungswinkels geneigt.

### Bezugszeichenliste

- 1: Kraftfahrzeug
- 2: Lenkrad
- 3: Armaturenbrett
- 4: Bedienvorrichtung
- 10: Anzeigesteuergerät
- 20: Bussystem
- 21: Mobiltelefon
- 22: Telefonschnittstelle
- 23: Navigationskernel
- 24: Klimaautomatik
- 25: Infotainmentsystem
- 30: Kartendarstellung
- 31: Route
- 40: Innerer Bereich
- 41: Rahmen
- 51, 61, 71, 72: Pfeil
- 52, 62: Doppelpfeil
- 53, 63: Pfeilpaar
- 411: Oberer Teil
- 412: Unterer Teil
- 413: Linker Teil
- 414: Rechter Teil

## Patentansprüche

1. Navigationssystem, insbesondere für ein Kraftfahrzeug (1), zur Bestimmung der Position des Navigationssystems oder des Kraftfahrzeuges (1) und zur Bestimmung einer Route (31) zu einem Zielpunkt, wobei das Navigationssystem ein Display (12) zur Darstellung veränderlicher Informationen und einen über dem Display (12) angeordneten transparenten Touchscreen (11) zum Erkennen der Position einer Berührung des Touchscreens oder ein unabhängig vom Display (12) angeordnetes Touchpad umfasst, wobei eine Berührung des Touchpads oder eine Bediengeste definierten Koordinaten auf dem Display (12) zuordbar ist und Koordinaten des Touchpads mit Koordinaten des Displays (12) koordinieren, wobei das Navigationssystem eine Steuerung (10) zur Anzeige einer Kartendarstellung (30) auf dem Display (12) als ein erster Bedienbereich (40) und zur Anzeige zumindest eines zweiten Bedienbereichs (411, 412) auf dem Display (12) umfasst, wobei bei einer berührenden Ziehbewegung (51) über den Touchscreen (11) oder das Touchpad über dem ersten Bedienbereich (40) eine Funktion aus der Gruppe
- Verschieben der Kartendärstellung (30),
- Drehen der Kartendarstellung (30) und
- Neigen der Kartendarstellung (30)
ausführbar ist, und wobei bei einer berührenden Ziehbewegung (61) über den Touchscreen (11) oder das Touchpad über dem zweiten Bedienbereich (411 , 412) eine andere Funktion aus der Gruppe
- Verschieben der Kartendarstellung (30),
- Drehen der Kartendarstellung (30) und
- Neigen der Kartendarstellung (30)
ausführbar ist.

2. Navigationssystem nach Anspruch 1, **dadurch gekennzeichnet, dass** mittels der Steuerung (10) ein dritter Bedienbereich (413, 414) auf dem Display (12) darstellbar ist, wobei bei einer berührenden Ziehbewegung (71, 72) über den Touchscreen (11) oder das Touchpad über dem dritten Bedienbereich (413 , 414) die verbleibende Funktion aus der Gruppe
- Verschieben der Kartendarstellung (30),
- Drehen der Kartendarstellung (30) und
- Neigen der Kartendarstellung (30)
ausführbar ist.

3. Navigationssystem nach Anspruch 2, **dadurch gekennzeichnet, dass** der zweite Bedienbereich (411, 412) und der dritte Bedienbereich (413, 414) einen den ersten Bedienbereich (40) umgebenden Rahmen (41) bilden.

4. Navigationssystem nach Anspruch 3, **dadurch gekennzeichnet, dass**, der zweite Bedienbereich dem unteren Teil (411) des Rahmens (41) und/oder dem oberen Teil (412) des Rahmens (41) zugeordnet ist.

5. Navigationssystem nach Anspruch 3 oder 4, **dadurch gekennzeichnet, dass** der dritte Bedienbereich dem linken Teil (413) des Rahmens (41) und/oder dem rechten-Teil (414) des Rahmens (41) zugeordnet ist.

6. Navigationssystem nach einem der vorhergehenden Ansprüche, **dadurch gekennzeichnet, dass** der zweite Bedienbereich (411, 412) waagerecht orientiert ist.

7. Navigationssystem nach einem der Ansprüche 2 bis 6, **dadurch gekennzeichnet, dass** der dritte Bedienbereich (413, 414) senkrecht orientiert ist.

8. Navigationssystem-nach einem der vorhergehenden Ansprüche, **dadurch gekennzeichnet, dass** die Kartendarstellung (30) bei einer berührenden Ziehbewegung (51) über den Touchscreen (11) oder das Touchpad über dem ersten Bedienbereich (40) verschiebbar ist.

9. Navigationssystem nach einem der vorhergehenden Ansprüche, **dadurch gekennzeichnet, dass** die Kärtendarstellung (30) bei einer berührenden Ziehbewegung (61) über den Touchscreen (11) oder das Touchpad über dem zweiten Bedienbereich (411, 412) drehbar ist.

10. Navigationssystem nach einem der Ansprüche 2 bis 9, **dadurch gekennzeichnet, dass** die Kartendarstellung (30) bei einer berührenden Ziehbewegung (71) über den Touchscreen (11) oder das Touchpad über dem dritten Bedienbereich (40) neigbar ist.

11. Navigationssystem nach einem der vorhergehenden Ansprüche, **dadurch gekennzeichnet, dass** der Touchscreen (11) als Multitouchscreen (11) oder das Touchpad als Multitouchpad ausgestaltet ist, wobei bei einer berührenden Stauch- oder Spreizbewegung (52 , 53) über den Multitouchscreen (11) oder das Multitouchpad über dem ersten Bedienbereich (40) eine Funktion aus der Gruppe
- Verkleinern oder Vergrössern der Kartendarstellung (30) und
- Neigen der Kartendarstellung (30)
ausführbar ist, und wobei bei einer berührenden Stauch- oder Spreizbewegung (62 , 63) über den Multitouchscreen (11) oder das Multitouchpad über dem zweiten Bedienbereich (411, 412) und/oder über dem dritten Bedienbereich (413, 414) die andere Funktion aus der Gruppe
- Verkleinern oder Vergrössern der Kartendarstellung (30) und
- Neigen der Kartendarstellung (30)
ausführbar ist.

12. Navigationssystem, insbesondere für ein Kraftfahrzeug (1), zur Bestimmung der Position des Navigationssystems oder des Kraftfahrzeuges (1) und zur Bestimmung einer Route (31) zu einem Zielpunkt, wobei das Navigationssystem ein Display (12) zur Darstellung veränderlicher Informationen und einen über dem Display (12) angeordneten transparenten Multitouchscreen (11) oder ein unabhängig vom Display angeordnetes Multitouchpad zum Erkennen der Positionen von zumindest zwei gleichzeitig erfolgenden Berührungen des Multitouchscreens oder des Multitouchpads umfasst, wobei eine Berührung des Multitouchpads oder eine Bediengeste definierten Koordinaten auf dem Display (12) zuordbar ist und Koordinaten des Multitouchpads mit Koordinaten des Displays (12) koordinieren, wobei das Navigationssystem eine Steuerung (10) zur Anzeige einer Kartendarstellung (30) auf dem Display (12) als ein erster Bedienbereich (40) und zur Anzeige zumindest eines zweiten Bedienbereichs (411 , 412) auf dem Display (12) umfasst, wobei bei einer berührenden Stauch- oder Spreizbewegung (52 , 53) über den Multitouchscreen (11) oder das Multitouchpad über dem ersten Bedienbereich (40) eine Funktion aus der Gruppe
- Verkleinern oder Vergrössern der Kartendarstellung (30) und
- Neigen der Kartendarstellung (30)
ausführbar ist, und wobei bei einer berührenden Stauch- oder Spreizbewegung (52 , 53) über den Multitouchscreen (11) oder das Multitouchpad über dem zweiten Bedienbereich (411, 412) die andere Funktion aus der Gruppe
- Verkleinern oder Vergrössern der Kartendarstellung (30) und
- Neigen der Kartendarstellung (30)
ausführbar ist.

13. Verfahren zum-Betrieb eines Navigationssystems, insbesondere eines Navigationssystems nach einem der vorhergehenden Ansprüche, zur Bestimmung der Position des Navigationssystems oder des Kraftfahrzeuges (1) und zur Bestimmung einer Route (31) zu einem Zielpunkt, wobei das Navigationssystem ein Display (12) zur Darstellung veränderlicher Informationen und einen über dem Display (12) angeordneten transparenten Touchscreen (11) oder ein unabhängig vom Display angeordnetes Touchpad zum Erkennen der Position einer Berührung des Touchscreens bzw. des Touchpads, wobei eine Berührung des Touchpads oder eine Bediengeste definierten Koordinaten auf dem Display (12) zuordbar ist und Koordinaten des Touchpads mit Koordinaten des Displays (12) koordinieren, oder einen über dem Display (12) angeordneten transparenten Multitouchscreen (11) oder ein unabhängig vom Display (12) angeordnetes Multitouchpad zum Erkennen der Positionen von zumindest zwei gleichzeitig erfolgenden Berührungen des Multitouchscreens bzw. des Multitouchpads umfasst, wobei eine Berührung des Multitouchpads oder eine Bediengeste definierten Koordinaten auf dem Display (12) zuordbar ist und Koordinaten des Multitouchpads mit Koordinaten des Displays (12) koordinieren, wobei auf dem Display (12) eine Kartendarstellung (30) als ein erster Bedienbereich (40) sowie ein zweiter Bedienbereich (40) dargestellt werden, wobei bei einer berührenden Ziehbewegung (51) über den Touchscreen (11) oder des Touchpads oder den Multitouchscreen (11) oder das Multitouchpad über dem ersten Bedienbereich (40) eine Funktion aus der Gruppe
- Verschieben der Kartendarstellung (30),
- Drehen der Kartendarstellung (30) und
- Neigen der Kartendarstellung (30)
ausgeführt wird, und wobei bei einer berührenden Ziehbewegung (61) über den Touchscreen (11) oder das Touchpad oder den Multitouchscreen (11) oder das Multi-touchpad über dem zweiten Bedienbereich (411, 412) eine andere Funktion aus der Gruppe
- Verschieben der Kartendarstellung (30),
- Drehen der Kartendarstellung (30) und
- Neigen der Kartendarstellung (30)
ausgeführt wird.

14. Verfahren nach Anspruch 13, **dadurch gekennzeichnet, dass** auf dem Display (12) ein dritter Bedienbereich (413, 414) dargestellt wird, wobei bei einer berührenden Ziehbewegung (71) über den Touchscreen (11) oder das Touchpad oder den Multitouchscreen (11) oder das Multitouchpad über dem dritten Bedienbereich (413, 414) die verbleibende Funktion aus der Gruppe
- Verschieben der Kartendarstellung (30),
- Drehen der Kartendarstellung (30) und
- Neigen der Kartendarstellung (30)
ausgeführt wird.

15. Verfahren nach Anspruch 13 oder 14 oder Verfahren zum Betrieb eines Navigationssystems nach Anspruch 12, **dadurch gekennzeichnet, dass** der Touchscreen (11) als Multitouchscreen (11) oder das Touchpad als Multitouchpad ausgestaltet ist, wobei bei einer berührenden Stauch- oder Spreizbewegung (52, 53) über den Multitouchscreen (11) oder das Multitouchpad über dem ersten Bedienbereich (40) eine Funktion aus der Gruppe
- Verkleinern oder Vergrössern der Kartendarstellung (30) und
- Neigen der Kartendarstellung (30)
ausgeführt wird, und wobei bei einer berührenden Stauch- oder Spreizbewegung (61, 62) über den Multitouchscreen (11) oder das Multitouchpad über dem zweiten Bedienbereich (411,412) und/oder über dem dritten Bedienbereich (413, 414) die andere Funktion aus der Gruppe
- Verkleinern oder Vergrössern der Kartendarstellung (30) und
- Neigen der Kartendarstellung (30)
ausgeführt wird.

## Claims

1. Navigation system, in particular for a motor vehicle (1), for determining the position of the navigation system or the motor vehicle (1) and for determining a route (31) to a destination, wherein the navigation system comprises a display (12) for presenting variable information and a transparent touchscreen (11) arranged over the display (12) for detecting the position of a touch on the touchscreen or a touchpad arranged independently of the display (12), wherein a touch on the touchpad or an operator movement can be associated with defined coordinates on the display (12) and coordinates of the touchpad coordinate with coordinates of the display (12), wherein the navigation system comprises a controller (10) for displaying a map presentation (30) on the display (12) as a first operating region (40) and for displaying at least one second operating region (411, 412) on the display (12), wherein, in the event of a contacting dragging movement (51) across the touchscreen (11) or the touchpad over the first operating region (40), a function from the group consisting of
- movement of the map presentation (30),
- rotation of the map presentation (30) and
- inclination of the map presentation (30)
can be carried out, and wherein, in the event of a contacting dragging movement (61) across the touchscreen (11) or the touchpad over the second operating region (411, 412), a different function from the group consisting of
- movement of the map presentation (30),
- rotation of the map presentation (30) and
- inclination of the map presentation (30)
can be carried out.

2. Navigation system according to claim 1, **characterised in that** a third operating region (413, 414) can be presented on the display (12) by the controller (10), it being possible for the remaining function from the group consisting of
- movement of the map presentation (30),
- rotation of the map presentation (30) and
- inclination of the map presentation (30)
to be carried out in the event of a contacting dragging movement (71, 72) across the touchscreen (11) or the touchpad over the third operating region (413. 414).

3. Navigation system according to claim 2, **characterised in that** the second operating region (411, 412) and the third operating region (413, 414) form a frame (41) surrounding the first operating region (40).

4. Navigation system according to claim 3, **characterised in that** the second operating region is associated with the lower portion (411) of the frame (41) and/or with the upper portion (412) of the frame (41).

5. Navigation system according to either claim 3 or claim 4, **characterised in that** the third operating region is associated with the left-hand portion (413) of the frame (41) and/or with the right-hand portion (414) of the frame (41).

6. Navigation system according to any of the preceding claims, **characterised in that** the second operating region (411, 412) is horizontally oriented.

7. Navigation system according to any of claims 2 to 6, **characterised in that** the third operating region (413, 414) is vertically oriented.

8. Navigation system according to any of the preceding claims, **characterised in that** the map presentation (30) can be moved in the event of a contacting dragging movement (51) across the touchscreen (11) or the touchpad over the first operating region (40).

9. Navigation system according to any of the preceding claims, **characterised in that** the map presentation (30) can be rotated in the event of a contacting dragging movement (61) across the touchscreen (11) or the touchpad over the second operating region (411, 412).

10. Navigation system according to any of claims 2 to 9, **characterised in that** the map presentation (30) can be inclined in the event of a contacting dragging movement (71) across the touchscreen (11) or the touchpad over the third operating region (40).

11. Navigation system according to any of the preceding claims, **characterised in that** the touchscreen (11) is configured as a multi-touchscreen (11) or the touchpad is configured as a multi-touchpad, a contacting compressing or spreading movement (52, 53) across the multi-touchscreen (11) or the multi-touchpad over the first operating region (40) making it possible for a function from the group consisting of
- reduction or enlargement of the map presentation (30) and
- inclination of the map presentation (30)
to be carried out, and a contacting compressing or spreading movement (62, 63) across the multi-touchscreen (11) or the multi-touchpad over the second operator control region (411, 412) and/or over the third operating region (413, 414) making it possible for the other function from the group consisting of
- reduction or enlargement of the map presentation (30) and
- inclination of the map presentation (30)
to be carried out.

12. Navigation system, in particular for a motor vehicle (1), for determining the position of the navigation system or the motor vehicle (1) and for determining a route (31) to a destination, wherein the navigation system comprises a display (12) for presenting variable information and a transparent multi-touchscreen (11) arranged over the display (12) or a multi-touchpad arranged independently of the display for detecting the positions of at least two simultaneously-occurring touches on the multi-touchscreen or the multi-touchpad, wherein a touch on the multi-touchpad or an operator movement can be associated with defined coordinates on the display (12) and coordinates of the multi-touchpad coordinate with coordinates of the display (12), wherein the navigation system comprises a controller (10) for displaying a map presentation (30) on the display (12) as a first operating region (40) and for displaying at least one second operating region (411, 412) on the display (12), wherein, in the event of a contacting compressing or spreading movement (52, 53) across the multi-touchscreen (11) or the multi-touchpad over the first operating region (40), a function from the group consisting of
- reduction or enlargement of the map presentation (30) and
- inclination of the map presentation (30)
can be carried out, and wherein, in the event of a contacting compressing or spreading movement (52, 53) across the multi-touchscreen (11) or the multi-touchpad over the second operating region (411, 412), the other function from the group consisting of
- reduction or enlargement of the map presentation (30) and
inclination of the map presentation (30)
can be carried out.

13. Method for operating a navigation system, in particular a navigation system according to any of the preceding claims, for determining the position of the navigation system or the motor vehicle (1) and for determining a route (31) to a destination, wherein the navigation system comprises a display (12) for presenting variable information and a transparent touchscreen (11) arranged over the display (12) or a touchpad arranged independently of the display for detecting the position of a touch on the touchscreen or the touchpad, wherein a touch on the touchpad or an operator movement can be associated with defined coordinates on the display (12) and coordinates of the touchpad coordinate with coordinates of the display (12), or a transparent multi-touchscreen (11) arranged over the display (12) or a multi-touchpad arranged independently of the display (12) for detecting the positions of at least two simultaneously-occurring touches on the multi-touchscreen or the multi-touchpad, wherein a touch on the multi-touchpad or an operator movement can be associated with defined coordinates on the display (12) and coordinates of the multi-touchpad coordinate with coordinates of the display (12), wherein a map presentation (30) as a first operating region (40) and a second operating region (40) is presented on the display (12), wherein, in the event of a contacting dragging movement (51) across the touchscreen (11) or the touchpad or the multi-touchscreen (11) or the multi-touchpad over the first operating region (40), a function from the group consisting of
- movement of the map presentation (30),
- rotation of the map presentation (30) and
- inclination of the map presentation (30)
is carried out, and wherein, in the event of a contacting dragging movement (61) across the touchscreen (11) or the touchpad or the multi-touchscreen (11) or the multi-touchpad over the second operating region (411, 412), a different function from the group consisting of
- movement of the map presentation (30),
- rotation of the map presentation (30) and
- inclination of the map presentation (30)
is carried out.

14. Method according to claim 13, **characterised in that** a third operating region (413, 414) is presented on the display (12), the remaining function from the group consisting of
- movement of the map presentation (30),
- rotation of the map presentation (30) and
- inclination of the map presentation (30)
being carried out in the event of a contacting dragging movement (71) across the touchscreen (11) or the touchpad or the multi-touchscreen (11) or the multi-touchpad over the third operating region (413, 414).

15. Method according to either claim 13 or claim 14, or method for operating a navigation system according to claim 12, **characterised in that** the touchscreen (11) is configured as a multi-touchscreen (11) or the touchpad is configured as a multi-touchpad, a function from the group consisting of
- reduction or enlargement of the map presentation (30) and
- inclination of the map presentation (30)
being carried out in the event of a contacting compressing or spreading movement (52, 53) across the multi-touchscreen (11) or the multi-touchpad over the first operating region (40), and the other function from the group consisting of
- reduction or enlargement of the map presentation (30) and
- inclination of the map presentation (30)
being carried out in the event of a contacting compressing or spreading movement (61, 62) across the multi-touchscreen (11) or the multi-touchpad over the second operating region (411, 412) and/or over the third operating region (413,414).

## Revendications

1. Système de navigation, en particulier pour un véhicule automobile (1), pour déterminer la position du système de navigation ou du véhicule automobile (1) et pour déterminer une route (31) vers un point cible, dans lequel le système de navigation comprend un écran d'affichage (12) pour présenter des informations variables et un écran tactile transparent (11) aménagé par-dessus l'écran d'affichage (12) pour reconnaître la position d'un contact de l'écran tactile ou d'un bloc à effleurement aménagé indépendamment de l'écran d'affichage (12), dans lequel un contact du bloc à effleurement ou une manoeuvre de service peut être affecté(e) à des coordonnées définies sur l'écran d'affichage (12) et des coordonnées du bloc à effleurement sont coordonnées avec des coordonnées de l'écran d'affichage (12), dans lequel le système de navigation comprend une commande (10) pour l'affichage d'une représentation cartographique (30) sur l'écran d'affichage (12) comme première zone de service (40) et pour afficher au moins une deuxième zone de service (411, 412) sur l'écran d'affichage (12), dans lequel, lors d'un mouvement glissant de contact (51) sur l'écran tactile (11) ou sur le bloc à effleurement via la première zone de service (40), on peut réaliser une fonction choisie dans le groupe des suivantes :
- déplacement de la représentation cartographique (30),
- rotation de la représentation cartographique (30) et
- basculement de la représentation cartographique (30),
et dans lequel, lors d'un mouvement glissant de contact (61) sur l'écran tactile (11) ou sur le bloc à effleurement via la seconde zone de service (411, 412), on peut réaliser une autre fonction choisie dans le groupe des suivantes :
- déplacement de la représentation cartographique (30),
- rotation de la représentation cartographique (30) et
- basculement de la représentation cartographique (30).

2. Système de navigation selon la revendication 1, **caractérisé en ce que**, au moyen de la commande (10), on peut représenter une troisième zone de service (413, 414) sur l'écran d'affichage (12), dans lequel, lors d'un mouvement glissant de contact (71, 72) sur l'écran tactile (11) ou sur le bloc d'effleurement via la troisième zone de service (413, 414), on peur réaliser la fonction restante choisie dans le groupe des suivantes :
- déplacement de la représentation cartographique (30),
- rotation de la représentation cartographique (30) et
- basculement de la représentation cartographique (30).

3. Système de navigation selon la revendication 2, **caractérisé en ce que** la deuxième zone de service (411, 412) et la troisième zone de service (413, 414) forment un cadre (41) entourant la première zone de service (40).

4. Système de navigation selon la revendication 3, **caractérisé en ce que** la deuxième zone de service est affectée à la partie inférieure (411) du cadre (41) et/ou à la partie supérieure (412) du cadre (41).

5. Système de navigation selon la revendication 3 ou la revendication 4, **caractérisé en ce que** la troisième zone de service est affectée à la partie de gauche (413) du cadre (41) et/ou à la partie de droite (414) du cadre (41).

6. Système de navigation selon l'une quelconque des revendications précédentes, **caractérisé en ce que** la deuxième zone de service (411, 412) est orientée horizontalement.

7. Système de navigation selon l'une quelconque des revendications 2 à 6, **caractérisé en ce que** la troisième zone de service (413, 414) est orientée verticalement.

8. Système de navigation selon l'une quelconque des revendications précédentes, **caractérisé en ce que** la représentation cartographique (30) peut, lors d'un mouvement glissant de contact (51), être déplacée sur l'écran tactile (11) ou sur le bloc à effleurement via la première zone de service (40).

9. Système de navigation selon l'une quelconque des revendications précédentes, **caractérisé en ce que** la représentation cartographique (30) peut, lors d'un mouvement glissant de contact (61), être soumise à une rotation sur l'écran tactile (11) ou sur le bloc à effleurement via la deuxième zone de service (411, 412).

10. Système de navigation selon l'une quelconque des revendications 2 à 9, **caractérisé en ce que** la représentation cartographique (30) peut, lors d'un mouvement glissant de contact (71), être basculée sur l'écran tactile (11) ou sur le bloc à effleurement via la troisième zone de service (40).

11. Système de navigation selon l'une quelconque des revendications précédentes, **caractérisé en ce que** l'écran tactile (11) se présente sous la forme d'un écran tactile multipoint (11) ou le bloc à effleurement sous la forme d'un bloc à effleurement multipoint, dans lequel on peut, lors d'un mouvement de compression ou d'écartement de contact (52, 53) sur l'écran tactile multipoint (11) ou sur le bloc à effleurement multipoint via la première zone de service (40), effectuer une fonction choisie dans le groupe des suivantes :
- réduction ou agrandissement de la représentation cartographique (30) et
- basculement de la représentation cartographique (30),
et dans lequel on peut, lors d'un mouvement de compression ou d'écartement de contact (62, 63) sur l'écran tactile multipoint (11) ou sur le bloc à effleurement multipoint via la deuxième zone de service (411, 412) et/ou via la troisième zone de service (413, 414), effectuer l'autre fonction choisie dans le groupe des suivantes :
- réduction ou agrandissement de la représentation cartographique (30) et
- basculement de la représentation cartographique (30).

12. Système de navigation, en particulier pour un véhicule automobile (1), pour déterminer la position du système de navigation ou du véhicule automobile (1) et pour déterminer une route (31) vers un point cible, dans lequel le système de navigation comprend un écran d'affichage (12) pour présenter des informations variables et un écran tactile multipoint transparent (11) aménagé par-dessus l'écran d'affichage (12) ou un bloc à effleurement multipoint aménagé indépendamment de l'écran d'affichage pour reconnaître les positions d'au moins deux contacts simultanés de l'écran tactile multipoint ou du bloc à effleurement multipoint, dans lequel un contact du bloc à effleurement multipoint ou une manoeuvre de service peut être affecté(e) à des coordonnées définies sur l'écran d'affichage (12) et des coordonnées du bloc à effleurement multipoint sont coordonnées avec des coordonnées de l'écran d'affichage (12), dans lequel le système de navigation comprend une commande (10) pour afficher une représentation cartographique (30) sur l'écran d'affichage (12) comme première zone de service (40) et pour afficher au moins une deuxième zone de service (411, 412) sur l'écran d'affichage (12), dans lequel on peut, lors d'un mouvement de compression ou d'écartement de contact (52, 53) sur l'écran tactile multipoint (11) ou sur le bloc à effleurement multipoint via la première zone de service (40), effectuer une fonction choisie dans le groupe des suivantes :
- réduction ou agrandissement de la représentation cartographique (30) et
- basculement de la représentation cartographique (30),
et dans lequel on peut, lors d'un mouvement de compression ou d'écartement de contact (52, 53) sur l'écran tactile multipoint (11) ou sur le bloc à effleurement multipoint via la deuxième zone de service (411, 412), effectuer l'autre fonction choisie dans le groupe des suivantes :
- réduction ou agrandissement de la représentation cartographique (30) et
- basculement de la représentation cartographique (30).

13. Procédé de fonctionnement d'un système de navigation, en particulier d'un système de navigation selon l'une quelconque des revendications précédentes, pour déterminer la position du système de navigation ou du véhicule automobile (1) et pour déterminer une route (31) vers un point cible, dans lequel le système de navigation comprend un écran d'affichage (12) pour présenter des informations variables et un écran tactile transparent (11) aménagé par-dessus l'écran d'affichage (12) ou un bloc à effleurement aménagé indépendamment de l'écran d'affichage pour reconnaître la position d'un contact de l'écran tactile ou du bloc à effleurement, dans lequel un contact du bloc à effleurement ou une manoeuvre de service peut être affecté(e) à des coordonnées définies sur l'écran d'affichage (12) et des coordonnées du bloc à effleurement sont coordonnées avec des coordonnées de l'écran d'affichage (12), ou un écran tactile multipoint transparent (11) aménagé sur l'écran d'affichage (12) ou un bloc à effleurement multipoint aménagé indépendamment de l'écran d'affichage (12) pour reconnaître les positions d'au moins deux contacts simultanés de l'écran tactile multipoint ou du bloc à effleurement multipoint, dans lequel un contact du bloc à effleurement multipoint ou une manoeuvre de service peut être affectée à des coordonnées définies sur l'écran d'affichage (12) et des coordonnées du bloc à effleurement multipoint sont coordonnées avec des coordonnées de l'écran d'affichage (12), dans lequel, sur l'écran d'affichage (12), une représentation cartographique (30) comme première zone de service (40) ainsi qu'une deuxième zone de service (40) sont représentées, dans lequel, lors d'un mouvement glissant de contact (51) sur l'écran tactile (11) ou sur le bloc à effleurement ou sur l'écran tactile multipoint (11) ou sur le bloc à effleurement multipoint via la première zone de service (40), on peut réaliser une fonction choisie dans le groupe des suivantes :
- déplacement de la représentation cartographique (30),
- rotation de la représentation cartographique (30) et
- basculement de la représentation cartographique (30),
et dans lequel, lors d'un mouvement glissant de contact (61) sur l'écran tactile (11) ou sur le bloc à effleurement ou sur l'écran tactile multipoint (11) ou sur le bloc à effleurement multipoint via la seconde zone de service (411, 412), on peut réaliser une autre fonction choisie dans le groupe des suivantes :
- déplacement de la représentation cartographique (30),
- rotation de la représentation cartographique (30) et
- basculement de la représentation cartographique (30).

14. Procédé selon la revendication 13, **caractérisé en ce qu'**une troisième zone de service (413, 414) est représentée sur l'écran d'affichage (12), dans lequel, lors d'un mouvement glissant de contact (71) sur l'écran tactile (11) ou sur le bloc à effleurement ou sur l'écran tactile multipoint (11) ou sur le bloc à effleurement multipoint via la troisième zone de service (413, 414), on peut réaliser la fonction restante choisie dans le groupe des suivantes :
- déplacement de la représentation cartographique (30),
- rotation de la représentation cartographique (30) et
- basculement de la représentation cartographique (30).

15. Procédé selon la revendication 13 ou la revendication 14 ou procédé de fonctionnement d'un système de navigation selon la revendication 12, **caractérisé en ce que** l'écran tactile (11) se présente sous la forme d'un écran tactile multipoint (11) ou le bloc à effleurement sous la forme d'un bloc à effleurement multipoint, dans lequel on peut, lors d'un mouvement de compression ou d'écartement de contact (52, 53) sur l'écran tactile multipoint (11) ou sur le bloc à effleurement multipoint via la première zone de service (40), effectuer une fonction choisie dans le groupe des suivantes :
- réduction ou agrandissement de la représentation cartographique (30) et
- basculement de la représentation cartographique (30),
et dans lequel on peut, lors d'un mouvement de compression ou d'écartement en contact (61, 62) sur l'écran tactile multipoint (11) ou sur le bloc à effleurement multipoint via la deuxième zone de service (411, 412) et/ou via la troisième zone de service (413, 414), effectuer l'autre fonction choisie dans le groupe des suivantes :
- réduction ou agrandissement de la représentation cartographique (30) et
- basculement de la représentation cartographique (30).
